# EUROPEAN PATENT APPLICATION

(11) **EP 1 870 353 A1**
(43) Date of publication of application: **26.12.2007**
(21) Application number: 07011459.0
(22) Date of filing: 12.06.2007
(51) Int. Cl.: B65D 90/00, B65D 90/02, B62D 33/04

(54) **Refrigerated container with anti-collision plate**

(30) Priority: 21.06.2006 CN 200610036090
(71) Applicant: China International Marine Containers (Group) Ltd., Shekou Industrial Zone Shenzhen, Guangdong, 518067 (CN); SHANGHAI CIMC REEFER CONTAINERS Co., Ltd., Baoshan District Shanghai 201908 (CN)
(72) Inventor: Peng, John, Shanghai 201908 (CN); Sun, Jianqi, Shenzen Guangdong 518067 (CN); Sun, Gary, Shanghai 201908 (CN)
(74) Representative: Leszczynski, André

(57) **Abstract**

The present invention discloses a refrigerated container with an anti-collision plate (23), comprising a side wall (2) having an inner side plate (21) and an outer side plate (25), a reinforcing rib (24) being vertically disposed on a surface of the inner side plate facing the outer side plate, wherein the anti-collision plate is disposed on a lower portion (211) of the surface of the inner side plate and formed with an opening (232) matching with a lower portion of the reinforcing rib. By forming the opening on the anti-collision plate for matching with the lower portion of the reinforcing rib, the reinforcing rib does not interfere with the anti-collision plate any more and is directly attached to the outer surface of the inner side plate throughout the entire height of the inner side plate, thereby effectively increasing strength and rigidity of the inner side plate and also eliminating the concentration of stress in the inner side plate generated by the abrupt change of cross-section. Thus, the problem caused by the concentration of stress due to the existence of the anti-collision plate is effectively solved, and the entire damage resistance of the refrigerated container against the disadvantageous external force is improved. Also, the process of fabricating the refrigerated container in accordance with the present invention is simplified.

## Description

### FIELD OF THE INVENTION

The present invention relates to a refrigerated container, and more particularly to a refrigerated container with an anti-collision plate.

### BACKGROUND OF THE INVENTION

Either of the side walls of a refrigerated container usually includes an inner side plate, an outer side plate and a foamed layer sandwiched between the inner side plate and the outer side plate. The inner side plate is usually equipped with a reinforcing rib on its outer surface facing the outer side plate or the foamed layer by spot-welding for example. When loading/unloading goods, specific vehicles such as fork lift trucks may often contact or collide with a lower portion of the inner side plate of the refrigerated container, thereby tending to damage the inner side plate. For this, the lower portion of the inner side plate of the container, especially the portion of the inner side plate with a height of 400mm or less from a lower end of the inner side plate, is covered with an anti-collision plate which extends transversely throughout the lower portion of the inner side plate. The inner anti-collision plate is typically a plate member made of Muffler Grade Stainless Steel (MGSS) with a thickness of 0.7-1.6mm, and is spot-welded to the outer surface of the inner side plate so as to strengthen the inner side plate. Due to the existence of the anti-collision plate, a stepped region (a height difference) with a height of about 1mm along an upper edge of the anti-collision plate is formed on the outer surface of the inner side plate. Thus, it is impossible for the reinforcing rib to be spot-welded simply and firmly to both the upper portion of the inner side plate and the anti-collision plate arranged at the lower portion of the inner side plate. To deal with such a problem, there are usually two following ways adopted:
(1) Dispensing with the reinforcing rib. As a result, the inner side plate will have an insufficient strength and thus is liable to be damaged.
(2) Shortening the reinforcing rib so as to extend to the upper edge of the anti-collision plate. However, since the reinforcing rib does not extend to the lower portion of the inner side plate, the bending strength of the lower portion of the inner side plate is often not satisfied. Meanwhile, due to the aforementioned stepped region or so-called abrupt change of cross-section (which is caused by a thickness difference between a relatively large thickness of the lower portion of the inner side plate corresponding to a total thickness of the anti-collision plate and the inner side plate and a relatively small thickness of the upper portion of the inner side plate corresponding to only the thickness of the inner side plate itself) of the inner side plate at the upper edge of the anti-collision plate, a relatively large concentration of stress may be generated in the inner side plate at the upper edge of the anti-collision plate. Thus, once the inner side plate receives a relatively large force directing to the outer side plate, the inner side plate may even deform permanently due to the relatively low bending strength of the lower portion thereof covered with the anti-collision plate and thus may cause disadvantageous effects on normal operation of the container.

### SUMMARY OF THE INVENTION

In view of the above-mentioned deficiencies of the refrigerated container with the anti-collision plate in the prior art, the present invention aims to provide a refrigerated container with an anti-collision plate capable of both enhancing strength and rigidity of the inner side plate and alleviating the concentration of stress within the inner side plate due to the abrupt change of cross-section of the lower portion of the inner side plate.

To accomplish the object of the present invention, there is provided a refrigerated container with an anti-collision plate, comprising a side wall having an inner side plate and an outer side plate, a reinforcing rib being vertically disposed on a surface (outer surface) of the inner side plate facing the outer side plate, wherein the anti-collision plate is disposed on a lower portion of the surface of the inner side plate and formed with an opening matching with a lower portion of the reinforcing rib.

According to an aspect of the present invention, the opening may extend throughout the anti-collision plate, such that the reinforcing rib may extend across the anti-collision plate.

According to an aspect of the present invention, the inner side plate may be formed with a wavelike portion, and the anti-collision plate may be formed with a wavelike portion matching with the wavelike portion of the inner side plate.

According to an aspect of the present invention, the wavelike portion of the inner side plate may not extend to both ends of the inner side plate and the wavelike portion of the anti-collision plate may not extend to both ends of the anti-collision plate either (that is, the waves in the wavelike portions are blind waves).

According to an aspect of the present invention, the anti-collision plate may be secured to the inner side plate by riveting or spot-welding.

By forming the opening on the anti-collision plate for matching with the lower portion of the reinforcing rib, the reinforcing rib does not interfere with the anti-collision plate any more and can be directly attached to the outer surface of the inner side plate throughout the entire height of the inner side plate, thereby effectively increasing strength and rigidity of the inner side plate and also eliminating the concentration of stress in the inner side plate generated by the abrupt change of cross-section. Thus, the problem caused by the concentration of stress due to the existence of the anti-collision plate is effectively solved, and the entire damage resistance of the refrigerated container against the disadvantageous external force is improved. In addition, according to the present invention, the welding of the reinforcing rib to the inner side plate can be finished by a single spot-welding machine without distinguishing the region of the inner side plate arranged with the anti-collision plate and the region of the inner side plate not arranged with the anti-collision plate, since the reinforcement rib does not interfere with the anti-collision plate, thereby simplifying the fabricating process while enhancing the connection strength. Moreover, due to the optimized structure of the anti-collision plate, the procedure of connecting the reinforcing rib to the inner side plate can be finished prior to the procedure of connecting the anti-collision plate to the inner side plate. Thus, the refrigerated container having the anti-collision plate in accordance with the present invention can be almost fabricated with the general process for fabricating a common refrigerated container without an anti-collision plate, and then is equipped with the anti-collision plate. That is, the fabricating process of the refrigerated container with the anti-collision plate according to the present invention, except the posterior step of connecting the anti-collision plate to the inner side plate, is the same as that of the refrigerated container without the anti-collision plate. Thus, the preparing time for switching the production line to produce either one of the two different types refrigerated containers may be reduced, and correspondingly the production flexibility and efficiency may be enhanced, which is significant for the mass production of the refrigerated containers.

### BRIEF DESCRIPTION OF THE DRAWINGS

The present invention will be described in detail with reference to the accompanying drawings and the embodiment(s). In the drawings:
FIG. 1 is a partial schematic sectional view of a refrigerated container with an anti-collision plate in accordance with a first embodiment of the present invention;
FIG. 2 is a schematic view showing essential structural details of the container shown in FIG.1 viewed from arrow A, with the outer side plate removed;
FIG. 3 is a cross-sectional view taken along line B-B in FIG. 2; and
FIG. 4 is a schematic view similar to FIG. 2, showing essential structural details of a refrigerated container with an anti-collision plate in accordance with a second embodiment of the present invention, with the outer side plate removed.

### DETAILED DESCRIPTION OF THE INVENTION

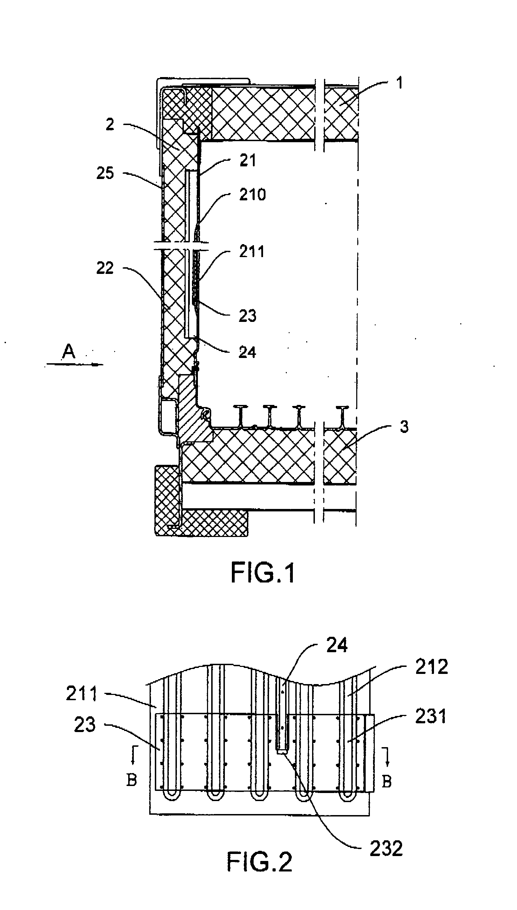

As shown in FIGS. 1, 2 and 3, a refrigerated container with an anti-collision plate in accordance with the first embodiment of the present invention includes a container body composed of a roof panel 1, side walls 2 and a floor panel 3. Either of the side walls 2 generally includes an inner side plate 21, an outer side plate 25 and a foamed layer 22 sandwiched between the inner side plate 21 and the outer side plate 25. A reinforcing rib 24 is vertically disposed on a surface of the inner side plate 21 facing the outer side plate 25 (hereinafter referred to as "an outer surface"). In other words, the reinforcing rib 24 is vertically positioned within a space defined between the inner side plate 21 and the outer side plate 25. The reinforcing rib 24 extends downwards from an upper portion 210 of the inner side plate 21 to a lower portion 211 of the inner side plate 21, particularly, the lower portion 211 of the inner side plate 21 is the portion of the inner side plate 21 with a height of 400mm or less from a lower end of the inner side plate 21. An anti-collision plate 23 is disposed on the outer surface of the inner side plate 21 by means of spot-welding so as to cover the lower portion 211 of the inner side plate 21. The reinforcing rib 24 extends downwards to a region of the inner side plate 21 covered with the anti-collision plate 23. The anti-collision plate 23 is formed with an opening 232 at a position corresponding to a lower portion of the reinforcing rib 24. The opening 232 is capable of matching with and thus accommodating a lower portion of the reinforcing rib 24 therein so as to prevent the reinforcing rib 24 from interfering with the anti-collision plate 23.

As a result, the reinforce rib 24 is directly attached to the outer surface of the inner side plate 21 vertically throughout the inner side plate 21, and will not create abrupt change of cross-section on the outer surface of the inner side plate 21 due to overlapping on the anti-collision plate 23. Thus, the strength and rigidity of the inner side plate 21 is enhanced, thereby effectively eliminating the concentration of stress in the inner side plate 21 generated by the abrupt change of cross-section due to the existence of the anti-collision plate, and improving the entire damage resistance of the refrigerated container against the disadvantageous external force.

When fabricating the refrigerated container with the anti-collision plate according to the present invention, instead of firstly welding a portion of the reinforcing rib 24 to the region without the anti-collision plate and then welding the remaining portion of the reinforcing rib 24 to the region with the anti-collision plate as required in the prior art, the welding of the reinforcing rib 24 to the inner side plate 21 in the present invention can be finished by a single spot-welding machine since the reinforcing rib 24 does not interfere with the anti-collision plate 23. Thus, the fabrication process of the refrigerated container according to the present invention is simplified, and also the connection strength of the refrigerated container is enhanced. Moreover, due to the optimized structure of the anti-collision plate 23, the procedure of connecting the reinforcing rib 24 to the inner side plate 21 can be finished prior to the procedure of connecting the anti-collision plate 23 to the inner side plate 21. Thus, the refrigerated container having the anti-collision plate in accordance with the present invention can be almost fabricated with the general process for fabricating a common refrigerated container without an anti-collision plate, and then is equipped with the anti-collision plate. That is, the fabricating process of the refrigerated container with the anti-collision plate according to the present invention, except the posterior step of connecting the anti-collision plate to the inner side plate, is the same as that of the refrigerated container without the anti-collision plate. Thus, the anti-collision plate 23 can be attached as required after the general process for fabricating a common refrigerated container with a reinforcing rib. Thus, the preparing time for switching the production line to produce either of the two different types refrigerated containers may be reduced, and correspondingly the production flexibility and efficiency may be enhanced, which is significant for the mass production of the refrigerated containers.

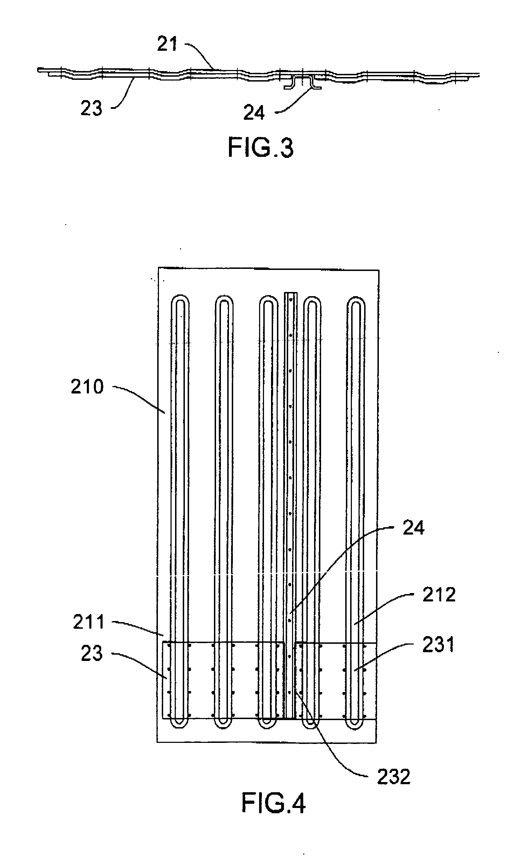

As shown in FIGS. 2 and 3, the inner side plate 21 is formed with a wavelike portion 212, and the anti-collision plate 23 is also formed with a wavelike portion 231 corresponding to the wavelike portion 212 of the inner side plate 21. The profile and position of the wavelike portion 231 of the anti-collision plate 23 match with those of the wavelike portion 212 of the inner side plate 21 so as to enable a tight attachment of the anti-collision plate 23 to the outer surface of the inner side plate 21 and thus enhance the strength and rigidity of the inner side plate 21. Preferably, the wavelike portion 212 does not extend to both ends of the inner side plate 21 and the wavelike portion 231 does not extend to both ends of the anti-collision plate 23 (that is the waves in the wavelike portions 212 and 231 are blind waves).

FIG. 4 illustrates the second embodiment of the refrigerated container with an anti-collision plate in accordance with the present invention viewed from arrow A shown in FIG. 1, with the outer side plate removed. Different from the first embodiment, the reinforcing rib 24 in the second embodiment extends downwards across the region of the inner side plate 21 covered with the anti-collision plate 23. Herein, the opening 232 of the anti-collision plate is formed across the whole anti-collision plate 23 so as to divide the anti-collision plate 23 at the region of the anti-collision plate 23 where the reinforcing rib passes. Similarly, the reinforcing rib 24 does not interfere with the anti-collision plate 23, and is thus directly and tightly attached to the outer surface of the inner side plate 21. Thus, an advantageous effect similar to the first embodiment may be accomplished.

In the above embodiments, the connection of the anti-collision plate 23 and the inner side plate 21 as well as the connection of the reinforcing rib 24 and the inner side plate 21 can be realized by riveting or other suitable manners instead of welding.

The optimized structure of the anti-collision plate according to the present invention solves the problem that a large level of concentration of stress occurs in the inner side plate due to the existence of the anti-collision plate, since the reinforcing rib in the invention can be directly contacted with the region of the inner side plate provided with the anti-collision plate, and in turn improves the safety performance and service life of the entire refrigerated container, which is significant for transporting cargo and external trade.

## Claims

1. A refrigerated container with an anti-collision plate, comprising a side wall having an inner side plate and an outer side plate, a reinforcing rib being vertically disposed on a surface of the inner side plate facing the outer side plate, wherein the anti-collision plate is disposed on a lower portion of the surface of the inner side plate and formed with an opening matching with a lower portion of the reinforcing rib.

2. The refrigerated container with the anti-collision plate as claimed in claim 1, wherein the opening extends throughout the anti-collision plate and the reinforcing rib extends across the anti-collision plate.

3. The refrigerated container with the anti-collision plate as claimed in claim 1, wherein the inner side plate is formed with a wavelike portion, and the anti-collision plate is formed with a wavelike portion matching with the wavelike portion of the inner side plate.

4. The refrigerated container with the anti-collision plate as claimed in claim 2, wherein the inner side plate is formed with a wavelike portion, and the anti-collision plate is formed with a wavelike portion matching with the wavelike portion of the inner side plate.

5. The refrigerated container as claimed in claim 3, wherein the wavelike portion of the inner side plate does not extend to both ends of the inner side plate and the wavelike portion of the anti-collision plate does not extend to both ends of the anti-collision plate either.

6. The refrigerated container as claimed in claim 4, wherein the wavelike portion of the inner side plate does not extend to both ends of the inner side plate and the wavelike portion of the anti-collision plate does not extend to both ends of the anti-collision plate either.

7. The refrigerated container as claimed in claim 3, wherein the anti-collision plate is secured to the inner side plate by riveting or spot-welding.

8. The refrigerated container as claimed in claim 4, wherein the anti-collision plate is secured to the inner side plate by riveting or spot-welding.
